# EUROPÄISCHE PATENTSCHRIFT

(11) **EP 1 342 650 B1**
(45) Veröffentlichungstag und Bekanntmachung des Hinweises auf die Patenterteilung: **15.12.2004**
(21) Anmeldenummer: 03004557.9
(22) Anmeldetag: 28.02.2003
(51) Int. Cl.: B62D 29/00, B62D 65/00

(54) **Fahrzeug-Karosserieteil und Verfahren zur Herstellung eines solchen Teils**
Vehicle body part and method of producing such a part
Pièce de carosserie de véhicule et son procédé de fabrication

(30) Priorität: 01.03.2002 DE 10208880; 30.04.2002 DE 10219495
(43) Veröffentlichungstag der Anmeldung: 10.09.2003
(73) Patentinhaber: Webasto AG, 82131 Stockdorf (DE)
(72) Erfinder: Kölbl, Michael, 82061 Neuried (DE)
(74) Vertreter: Bedenbecker, Markus

(56) Entgegenhaltungen:
- EP-A- 0 995 667
- US-A1- 2003 037 500

## Beschreibung

Die Erfindung betrifft ein Fahrzeug-Karosserieteil, insbesondere Dachmodul, mit einer Außenhaut aus einem im Coil-Coating-Verfahren mindestens außen beschichteten Metallblechteil sowie ein Verfahren zum Herstellen derartiger Fahrzeug-Karosserieteile.

Aus DE 196 12 898 C1 ist ein Verfahren zur Herstellung von Automobilkarosserieteilen bekannt, bei dem auf ein Coil aus Metallblech im so genannten Coil-Coating-Verfahren beidseitig Überzugsschichten aufgebracht und eingebrannt werden, welche die übliche Lackierung ersetzen, und bei dem aus dem Coil anschließend entsprechende Blechteile ausgestanzt und im Tiefziehverfahren verformt werden.

Aus DE 29 34 430 C2 ist ferner eine Sandwichplatte, insbesondere eine Klappe für eine Kraftfahrzeugkarosserie, mit einer zwischen Deckschichten angeordneten Kernschicht bekannt, wobei die Kernschicht Wabenstruktur aufweist und die Deckschichten die Waben der Kernschicht verschließen. Die Deckschichten und die Kernschicht können aus faserverstärktem Kunststoff bestehen.

In der nächstkommenden EP 0 995 667 A1 ist ein Verbundbauteil für Fahrzeugkarosserien beschrieben, das aus einer tiefgezogenen Außenhaut aus Metallblech oder Kunststofffolie und einer an die Innenseite der Außenhaut angeschäumten, faserarmierten Kunststoffschicht besteht.

Teile, die aus im Coil-Coating-Verfahren beschichteten Metallblechen ausgestanzt sind, weisen beschnittene Blechkanten auf. An diesen Kanten kommt es leicht zu Korrosion.

Es ist Aufgabe der vorliegenden Erfindung, ein Fahrzeug-Karosserieteil zu schaffen, das bei geringem Gewicht hohe Steifigkeit aufweist und bei dem gleichzeitig solche Korrosionsprobleme auf relativ einfache Weise zuverlässig ausgeräumt sind.

Diese Aufgabe wird mit der Erfindung gelöst durch ein Fahrzeug-Karosserieteil, insbesondere Dachmodul, mit einer Außenhaut aus einem im Coil-Coating-Verfahren mindestens außen beschichteten Metallblechteil, mit einer mit der Innenseite des Metallblechteils über eine Zwischenlage verbundenen Trägerstruktur und mit einer Abschlusslage auf der von dem Metallblechteil abgewendeten Seite der Trägerstruktur, die miteinander zu einem Verbund- oder Sandwichbauteil verpresst sind, bei dem die Kante des Metallblechteils in Kunstoffmaterial mindestens einer der Lagen und/oder in im Randbereich beim Verpressen eingebrachtem Kunststoff vollständig eingebettet ist.

Des weiteren soll ein kostengünstiges Verfahren zum Herstellen derartiger Fahrzeug-Karosserieteile bereitgestellt werden, das mit minimalem Zusatzaufwand für eine "Versiegelung" der beschnittenen korrosionsgefährdeten Blechkanten sorgt.

Zur Lösung dieser Aufgabe dient erfindungsgemäß ein Verfahren zum Herstellen eines Fahrzeug-Karosserieteils, insbesondere Dachmoduls, bei dem
(a) ein zur Bildung der Außenhaut des Karosserieteils bestimmtes, mindestens auf seiner Außenseite im Coil-Coating-Verfahren mit einer Überzugsschicht versehenes und aus einem Coil ausgeschnittenes Metallblechteil entsprechend der gewünschten Form des herzustellenden Karosserieteils umgeformt und randseitig beschnitten wird,
(b) in ein Hinterpresswerkzeug das umgeformte und beschnittene Metallblechteil, eine Zwischenlage, eine Trägerstruktur und auf der von dem Metallblechteil abgewendeten Seite der Trägerstruktur eine Abschlusslage so eingelegt werden, dass mindestens eine der genannten Lagen über das Metallblechteil randseitig übersteht,
(c) die im Verfahrensschritt (b) in das Hinterpresswerkzeug eingelegte Anordnung, gegebenenfalls unter Einbringung zusätzlichen Kunststoffs im Randbereich des Metallblechteils, derart verpresst wird, dass die Kante des Metallblechteils von Kunststoff vollständig umschlossen wird, und (d) das im Verfahrensschritt (c) erhaltene Verbundbauteil in dem über das Metallblechteil randseitig überstehenden Bereich getrimmt wird.

Das erfindungsgemäße Fahrzeug-Karosserieteil und dessen Herstellungsverfahren benötigen für die Versiegelung der beschnittenen Blechkanten keine zusätzlichen Arbeitsgänge.

Vielmehr wird für einen dauerhaften Kanten-Korrosionsschutz auf einfache Weise im Zuge des ohnehin notwendigen Verpressens der Lagen zu dem Verbundbauteil gesorgt.

Bevorzugte Ausgestaltungen der Erfindung ergeben sich aus den Unteransprüchen.

Vorteilhaft besteht die Trägerstruktur aus Wabenmaterial, insbesondere aus Papier- oder Karton-Wabenmaterial. Für die Zwischenlage und/oder die Abschlusslage eignet sich vor allem faserverstärkter Kunststoff, insbesondere in Form von mit Kunststoff getränkten Fasermatten oder von Kunststoff, der im Langfaser-Spritzgießverfahren auf die Trägerstruktur aufgebracht wird.

Das Metallblechteil besteht bevorzugt aus Stahl. Es kommt aber auch Blech aus Leichtmetall, insbesondere Aluminium in Betracht.

Das Metallblechteil ist vorzugsweise randseitig abgesenkt oder abgestellt (nach unten umgekantet), und mindestens ein außen beziehungsweise unten liegender Teil des abgesenkten oder abgestellten Randbereiches des Metallblechteils ist in Kunststoff eingebettet.

Im folgenden wird die Erfindung anhand der beigefügten Zeichnungen beispielhaft näher erläutert. Es zeigen:
Fign. 1 bis 4 schematisch aufeinander folgende Schritte bei der Herstellung eines Dachmoduls oder dergleichen, wobei
Fig. 1 im Schnitt einen Randbereich eines im Coil-Coating-Verfahren mindestens außen beschichteten, randseitig abgesenkten Metallblechteils veranschaulicht,
Fig. 2 im Schnitt das in ein Hinterpresswerkzeug eingelegte Metallblechteil der Fig. 1 in Verbindung mit weiteren Schichten veranschaulicht ist,
Fig. 3 im Schnitt die Anordnung gemäß Fig. 2 nach dem Verpressen darstellt, und
Fig. 4 im Schnitt das nach Trimmen der Anordnung gemäß Fig. 3 erhaltene Verbund- oder Sandwichbauteil veranschaulicht;
Fig. 5 eine abgewandelte Ausführungsform ähnlich Fig. 4, jedoch mit randseitig abgestelltem Metallblechteil;
Fig. 6 eine abgewandelte Ausführungsform ähnlich Fig. 3, bei der jedoch nur ein außenliegender Teil des abgesenkten Randbereiches des Metallblechteils in Kunststoff eingebettet ist;
Fig. 7 eine weiter abgewandelte Ausführungsform eines Verbundbauteils, wie es sich beispielsweise für den Deckel eines Schiebe- oder Schiebe/Hebedaches eignet, in einer Herstellungsverfahrensstufe gemäß Fig. 3; sowie
Fig. 8 gleichfalls in einer Herstellungsverfahrensstufe gemäß Fig. 3 einen Teilschnitt eines Dachmoduls mit einem Metallblechteil mit abgestelltem, nur in einem unteren Bereich eingebettetem Rand.

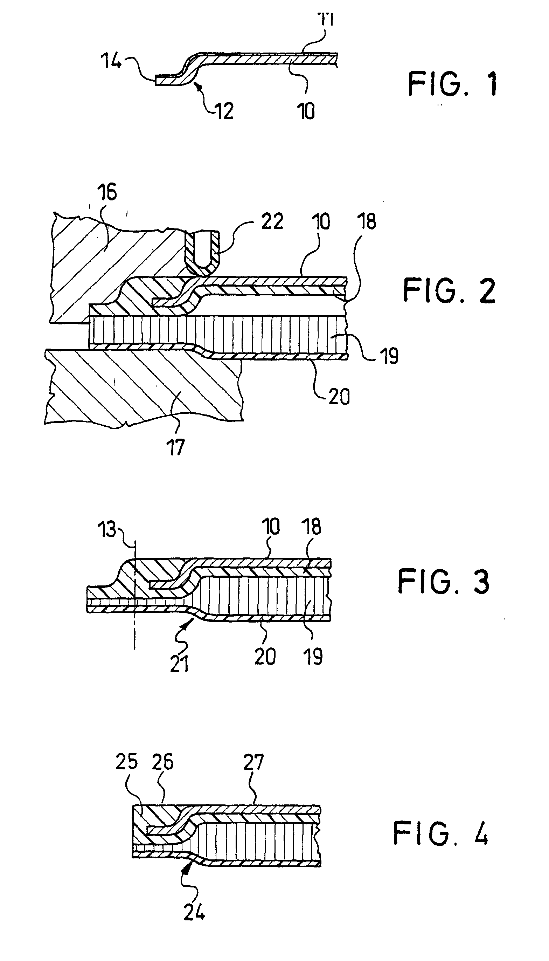

Bei dem vorliegenden Verfahren zum Herstellen eines Fahrzeug-Karosserieteils wird in einem ersten Verfahrensschritt ein zur Bildung der Außenhaut des Karosserieteils bestimmtes Metallblechteil 10 beispielsweise durch Tiefziehen entsprechend der gewünschten Form des herzustellenden Karosserieteils umgeformt und randseitig beschnitten. Das Metallblechteil 10 ist mindestens auf seiner Außenseite im Coil-Coating-Verfahren mit einer bei 11 angedeuteten Überzugsschicht versehen und in an sich bekannter Weise aus einem Coil ausgeschnitten, insbesondere ausgestanzt. Als Werkstoff für das Metallblechteil 10 eignet sich insbesondere Stahl. Grundsätzlich kommt jedoch auch Leichtmetall, vor allem Aluminium, für diesen Zweck in Frage. Die Überzugsschicht 11 ist vorzugsweise tiefziehfähig, und sie kann die sonst übliche Fahrzeuglackierung ersetzen, wie dies beispielsweise in DE 196 12 898 C1 im einzelnen erläutert ist. Das Metallblechteil 10 ist in seinem Randbereich 12 innerhalb einer in Fig. 3 bei 13 dargestellten Beschnittkante abgesenkt. Seine Kante 14 liegt durch das Ausschneiden aus dem Coil frei, und sie ist daher noch nicht gegen Korrosion geschützt.

In einem nächsten Verfahrensschritt, der schematisch in Fig. 2 dargestellt ist, werden in ein Hinterpresswerkzeug mit Werkzeug-Oberteil 16 und Werkzeug-Unterteil 17 nacheinander das umgeformte und beschnittene Metallblechteil 10, eine Zwischenlage 18, eine Trägerstruktur 19 und auf der von dem Metallblechteil 10 abgewendeten Seite der Trägerstruktur 19 eine Abschlusslage 20 eingelegt, und zwar im veranschaulichten Ausführungsbeispiel so, dass die Lagen 18 und 20 sowie die Trägerstruktur 19 über das Metallblechteil 10 randseitig überstehen. Bei der Trägerstruktur 19 handelt es sich vorzugsweise um ein Waben material, zum Beispiel ein Wabenmaterial aus Papier, Karton, Metall oder Kunststoff, das dem Fahrzeug-Karosserieteil bei geringem Flächengewicht hohe Steifigkeit verleiht. Besonders geeignet sind Papier- oder Kartonwaben. Die Zwischenlage 18 sorgt nicht nur - ebenso wie die Abschlusslage 20 - für eine Aussteifung der Trägerstruktur 19, sondern auch für eine stabile Verbindung zwischen letzterer und dem Metallblechteil 10.

Die Zwischenlage 18 und die Abschlusslage 20 bestehen vorteilhaft aus faserverstärktem Kunststoff. Bei den Fasern kann es sich insbesondere um Glasfasern handeln. Geeignet sind aber durchaus auch viele andere Verstärkungsfasern wie beispielsweise Kohlefasern, Keflarfasern oder natürliche Fasern. Grundsätzlich können diese Lagen nach einem beliebigen der zahlreichen bekannten Verfahren zur Herstellung faserverstärkter thermoplastischer Kunststoffteile hergestellt und auf die Trägerstruktur 19 aufgebracht werden. So können die Verstärkungsfasern als Fasern, Garne, Rovings, Vliese, Gewebe oder Matten vorliegen. Besonders geeignet sind beispielsweise mit Fasermatten verstärkte Thermoplaste, zum Beispiel in Form von mit Polyurethan getränkten Glasfasermatten. Es kommen aber auch andere Lagen aus faserverstärktem Kunststoff in Betracht, so unter anderem aus angfaserverstärkten Thermoplastgranulaten hergestellte Lagen, das heißt Lagen aus Langfaserpellets, die dadurch erzeugt werden, dass parallel ausgerichtete Faserstränge beim Durchlauf durch einen Imprägnierkopf in diesem mit Thermoplastschmelze durchtränkt werden und der aus dem Imprägnierkopf austretende Strang anschließend von einem Stranggranulator auf eine Pelletlänge zwischen 10 und 50 mm geschnitten wird. Es können ferner Endlosfaserstränge direkt in den Schneckenzylinder der Platifiziereinheit einer Spritzgießmaschine eingeführt werden (VDI-Verlag, Fortschrittsberichte VDI, F. Truckenmüller, "Direktverarbeitung von Endlosfasern auf Spritzgießmaschinen"). Weitere vorliegend anwendbare "Long Fiber Injection"- (Langfaser-Spritzgieß-) Verfahren sind unter anderem aus DE 195 23 490, DE 195 38 255 und WO 00/37233 bekannt.

In einem anschließenden Verfahrensschritt wird die in das Hinterpresswerkzeug 16, 17 eingelegte Anordnung zu einem Verbund 21 gemäß Fig. 3 verpresst. Dabei wird die Kante 14 des Metallblechteils 10 vollständig in Kunststoff oder ein Kunststoff-Faser-Gemisch eingebettet, der beziehungsweise das vorzugsweise aus mindestens einer der Lagen 18, 20 und/oder aus der Trägerstruktur 19 stammt. Gegebenenfalls wird für diesen Zweck aber auch zusätzlicher Kunststoff, beispielsweise Polyurethan, in das Hinterpresswerkzeug im Randbereich 12 des Metallblechteils 10 eingedrückt. Eine in dem Hinterpresswerkzeug vorgesehene, in Fig. 2 bei 22 gezeigte Abdichtung liegt gegen den Hauptbereich des Metallblechteils 10 an und verhindert einen Austritt von Kunststoff aus dem Hinterpresswerkzeug. Durch das Verpressen werden also nicht nur die Einzelkomponenten 10, 18, 19
und 20 unter fest miteinander verbunden, sondern es wird zugleich sichergestellt, dass die korrosionsgefährdete metallische Kante 14 von Kunststoffmaterial vollständig umschlossen und auf diese Weise gegen Korrosion hervorragend geschützt wird.

Sodann wird der Verbund 21 entlang der Beschnittkante 13 getrimmt. Das fertige Verbundbauteil 24 ist im Teilschnitt in Fig. 4 veranschaulicht. Wie dort gezeigt ist, liegt bei diesem Ausführungsbeispiel der gesamte abgesenkte Randbereich 12 des Metallblechteils 10 in einem Kunststoffbett 25, dessen Oberseite 26 bündig mit dem anschließenden Teil 27 der Oberseite des im Coil-Coating-Verfahren beschichteten Metallblechteils 10 ist.

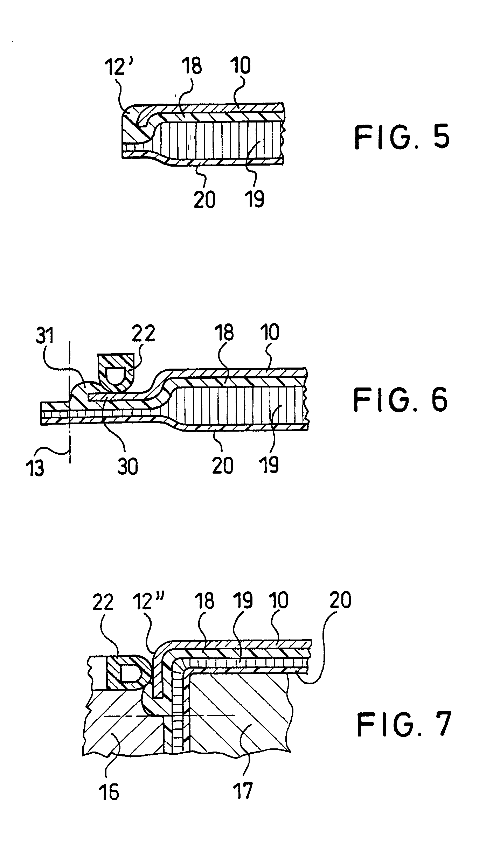

Das Ausführungsbeispiel der Fig. 5 unterscheidet sich von der zuvor erläuterten Ausführungsform im wesentlichen nur dadurch, dass ein Randbereich 12' des Metallblechteils 10 abgestellt ist. Es versteht sich, dass dabei unterschiedliche Abstellwinkel, beispielsweise im Bereich von 45° bis 90° vorgesehen werden können.

Bei dem in Fig. 6 veranschaulichten Ausführungsbeispiel ist ähnlich wie bei der Ausführungsform gemäß den Figuren 1 bis 4 der Randbereich 12 des Metallblechteils 10 gegenüber dem Hauptbereich abgesenkt. Anders als dort wird aber beim Verpressen die Abdichtung 22 mit dem Randbereich 12 in Eingriff gebracht, so dass nur ein die Kante 14 aufweisender außenliegender Teil 30 des abgesenkten Randbereiches 12 beim Verpressen in Kunststoffmasse 31 eingebettet wird. Nach dem Verpressen wird die Anordnung entlang der Beschnittkante 13 getrimmt. Diese Lösung erlaubt eine besonders zuverlässiges Abdichten beim Verpressen und vermeidet mögliche Anpress-Probleme im späteren Sichtbereich des Fahrzeug-Karosserieteils.

Fig. 7 zeigt eine weitere Ausführungsform eines Fahrzeug-Karosserieteils, beispielsweise eines Deckels für ein Schiebe- oder Schiebe/Hebedach, mit abgestelltem Randbereich 12", der breiter als bei dem Ausführungsbeispiel der Fig. 5 ist. Dabei sind die Lagen 18 und 20 sowie die Trägerstruktur 19 in ihrem über die Kante 14 des Metallblechteils 10 überstehenden Randbereich entsprechend abgestellt, und beim Verpressen wird die Abdichtung 22 ähnlich wie in Fig. 6 so auf den Randbereich 12" aufgesetzt, dass ein größerer Teil der Außenseite des abgestellten Randbereich 12" unbedeckt bleibt. Auch hier ist jedoch gewährleistet, dass die korrosionsgefährdete metallische Kante 14 durch Einbetten in Kunststoff geschützt ist. Wiederum erfolgt ein nachträglicher Beschnitt entlang der Kante 13.

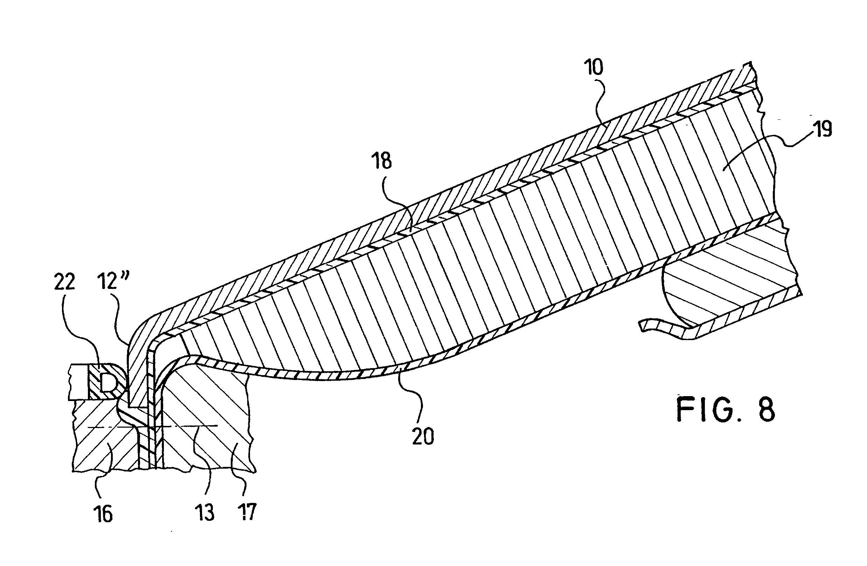

In Fig. 8 ist eine Alternative ähnlich Fig. 7 für ein Dachmodul dargestellt. Bezüglich der Randausbildung unterscheidet sie sich von der Lösung der Fig. 7 dadurch, dass nur die Lagen 18 und 20, nicht aber die Trägerstruktur 19 dem Randbereich 12" des Metallblechteils 10 folgend abgestellt sind.

### Bezugszeichenliste

- 10: Metallblechteil
- 11: Überzugsschicht
- 12, 12', 12": Randbereich von 10
- 13: Beschnittkante
- 14: Kante von 10
- 16: Werkzeug-Oberteil
- 17: Werkzeug-Unterteil
- 18: Zwischenlage
- 19: Trägerstruktur
- 20: Abschlusslage
- 21: Verbund
- 22: Abdichtung
- 24: Verbundbauteil
- 25: Kunststoffbett
- 26: Oberseite von 25
- 27: Teil der Oberseite von 10
- 30: Teil von 12
- 31: Kunststoffmasse

## Patentansprüche

1. Fahrzeug-Karosserieteil, insbesondere Dachmodul, mit einer Außenhaut aus einem im Coil-Coating-Verfahren mindestens außen beschichteten Metallblechteil (10), mit einer mit der Innenseite des Metallblechteils (10) über eine Zwischenlage (18) verbundenen Trägerstruktur (19) und mit einer Abschlusslage (20) auf der von dem Metallblechteil (10) abgewendeten Seite der Trägerstruktur (19), die miteinander zu einem Verbundbauteil (24) verpresst sind, bei dem die Kante (14) des Metallblechteils (10) in Kunstoffmaterial mindestens einer der Lagen (18,20) und/oder in im Randbereich (12) beim Verpressen eingebrachtem Kunststoff vollständig eingebettet ist.

2. Fahrzeug-Karosserieteil nach Anspruch 1, **dadurch gekennzeichnet, dass** die Trägerstruktur (19) aus Wabenmaterial, insbesondere aus Papier- oder Karton-Wabenmaterial, besteht.

3. Fahrzeug-Karosserieteil nach Anspruch 1 oder 2, **dadurch gekennzeichnet, dass** die Zwischenlage (18) und/oder die Abschlusslage (20) aus faserverstärktem Kunststoff bestehen.

4. Fahrzeug-Karosserieteil nach Anspruch 3, **dadurch gekennzeichnet, dass** als Zwischenlage (18) und/oder Abschlusslage (20) mit Kunststoff getränkte Fasermatten vorgesehen sind.

5. Fahrzeug-Karosserieteil nach Anspruch 4, **dadurch gekennzeichnet, dass** als Zwischenlage (18) und/oder Abschlusslage (20) mit Polyurethan getränkte Glasfasermatten vorgesehen sind.

6. Fahrzeug-Karosseneteil nach Anspruch 3, **dadurch gekennzeichnet, dass** die Zwischenlage (18) und/oder Abschlusslage (20) in einem Langfaser-Spritzgieß-Verfahren hergestellt sind.

7. Fahrzeug-Karosserieteil nach einem der vorhergehenden Ansprüche, **dadurch gekennzeichnet, dass** das Metallblechteil (10) aus Stahl besteht.

8. Fahrzeug-Karosserieteil nach einem der vorhergehenden Ansprüche, **dadurch gekennzeichnet, dass** das Metallblechteil (10) randseitig abgesenkt ist.

9. Fahrzeug-Karosserieteil nach einem der Ansprüche 1 bis 7, dadurch geken zeichnet, dass das Metallblechteil (10) randseitig abgestellt ist.

10. Fahrzeug-Karosserieteil nach Ansprüchen 8 und 9, **dadurch gekennzeichnet, dass** im wesentlichen der gesamte abgesenkte oder abgestellte Randbereich (12) des Metallblechteils (10) in Kunststoff eingebettet ist.

11. Fahrzeug-Karosserieteil nach Anspruch 8, **dadurch gekennzeichnet, dass** nur ein außenliegender Teil des abgesenkten Randbereiches (12) des Metallblechteils (10) in Kunststoff eingebettet ist.

12. Fahrzeug-Karosserieteil nach Anspruch 9, **dadurch gekennzeichnet, dass** nur ein untenliegender Teil des abgestellten Randbereiches (12) des Metallblechteils (10) in Kunststoff eingebettet ist

13. Verfahren zum Herstellen eines Fahrzeug-Karosserieteils, insbesondere Dachmoduls, bei dem
(a) ein zur Bildung der Außenhaut des Karosserieteils bestimmtes, mindestens auf seiner Außenseite im Coil-Coating-Verfahren mit einer Überzugsschicht (11) versehenes und aus einem Coil ausgeschnittenes Metallblechteil (10) entsprechend der gewünschten Form des herzustellenden Karosserieteils umgeformt und randseitig beschnitten wird,
(b) in ein Hinterpresswerkzeug (16) das umgeformte und beschnittene Metallblechteil (10), eine Zwischenlage (18), eine Trägerstruktur (19) und auf der von dem Metallblechteil (10) abgewendeten Seite der Trägerstruktur eine Abschlusslage (20) so eingelegt werden, dass mindestens eine der genannten Lagen (18,20) über das Metallblechteil (10) randseitig übersteht,
(c) die im Verfahrensschritt (b) in das Hinterpresswerkzeug (16) eingelegte Anordnung, gegebenenfalls unter Einbringung zusätzlichen Kunststoffs im Randbereich (12) des Metallblechteils (10), derart verpresst wird, dass die Kante (14) des Metallblechteils (10) von Kunststoff vollständig umschlossen wird, und
(d) das im Verfahrensschritt (c) erhaltene Verbundbauteil (21) in dem über das Metallblechteil (10) randseitig überstehenden Bereich getrimmt wird

14. Verfahren nach Anspruch 13, **dadurch gekennzeichnet, dass** eine Trägerstruktur (19) aus Wabenmaterial verwendet wird.

15. Verfahren nach Anspruch 13 oder 14, **dadurch gekennzeichnet, dass** im Verfahrensschritt (a) das Metallblechteil (10) innerhalb der Beschnittkante (13) des im Verfahrensschritt (c) erhaltenen Verbundbauteils (21) randseitig abgesenkt wird.

16. Verfahren nach Anspruch 13 oder 14, **dadurch gekennzeichnet, dass** im Verfahrensschritt (a) das Metallblechteil (10) innerhalb der Beschnittkante (13) des im Verfahrensschritt (c) erhaltenen Verbundbauteils (21) randseitig abgestellt wird.

17. Verfahren nach Anspruch 15 oder 16, **dadurch gekennzeichnet, dass** im Verfahrensschritt (c) im wesentlichen der gesamte abgesenkte oder abgestellte Randbereich (12) des Metallblechteils (10) mit Kunststoff umschlossen wird.

18. Verfahren nach Anspruch 16, **dadurch gekennzeichnet, dass** im Verfahrensschritt (c) nur ein außenliegender Teil (30) des abgesenkten Randbereiches (12) des Metallblechteils (10) mit Kunststoff umschlossen wird.

19. Verfahren nach Anspruch 13 oder 14, **dadurch gekennzeichnet, dass** im Verfahrensschritt (a) das Metallblechteil (10) randseitig abgestellt wird, im Verfahrensschritt (b) die Zwischenlage (18), die Trägerstruktur (19) und die Abschlusslage (20) so in das Hinterpresswerkzeug (16) eingelegt werden, dass mindestens eine der genannten Lagen über den abgestellten Rand des Metallblechteils (10) nach unten übersteht, und im Verfahrensschritt (d) das Verbundbauteil (21) unterhalb des abgestellten Randes des Metallblechteils (10) beschnitten wird.

20. Verfahren nach Anspruch 19, **dadurch gekennzeichnet, dass** im Verfahrensschritt (c) nur ein untenliegender Teil des abgestellten Randbereiches (12) des Metallblechteils (10) mit Kunststoff umschlossen wird.

21. Verfahren nach einem der Ansprüche 13 bis 20, **dadurch gekennzeichnet, dass** im Verfahrensschritt (b) sowohl die Zwischenlage (18) als auch die Abschlusslage (20) über das Metallblechteil (10) randseitig überstehend eingelegt werden.

22. Verfahren nach einem der Ansprüche 13 bis 21, **dadurch gekennzeichnet, dass** im Verfahrensschritt (b) auch die Trägerstruktur (19) über das Metallblechteil (10) randseitig überstehend eingelegt wird.

23. Verfahren nach einem der Ansprüche 13 bis 22, **dadurch gekennzeichnet, dass** als Zwischenlage (18) und/oder Abschlusslage (20) eine aus faserverstärktem Kunststoff bestehende Lage verwendet wird.

24. Verfahren nach Anspruch 23, **dadurch gekennzeichnet, dass** zur Ausbildung der Zwischenlage (18) und/oder Abschlusslage (20) eine Fasermatte mit Kunststoff getränkt wird.

25. Verfahren nach Anspruch 23, **dadurch gekennzeichnet, dass** zur Ausbildung der Zwischenlage (18) und/oder Abschlusslage (20) langfaserverstärkter Kunststoff auf die betreffende Seite der Trägerstruktur (19) aufgebracht wird.

## Claims

1. Vehicle body part, in particular roof module, having an outer skin of a sheet-metal part (10) coated at least on the outside by the coil coating process, having a supporting structure (19) connected to the inner side of the sheet-metal part (10) via an intermediate layer (18), and having a final layer (20) on the side of the supporting structure (19) facing away from the sheet-metal part (10), which are pressed with one another to form a composite component (24), in which the edge (14) of the sheet-metal part (10) is embedded completely in plastic material of at least one of the layers (18, 20) and/or in plastic introduced in the edge region (12) during pressing.

2. Vehicle body part according to Claim 1, **characterized in that** the supporting structure (19) consists of honeycomb material, in particular of paper or board honeycomb material.

3. Vehicle body part according to Claim 1 or 2, **characterized in that** the intermediate layer (18) and/or the final layer (20) consist of fibre-reinforced plastic.

4. Vehicle body part according to Claim 3, **characterized in that** fibre mats impregnated with plastic are provided as the intermediate layer (18) and/or final layer (20).

5. Vehicle body part according to Claim 4, **characterized in that** glass fibre mats impregnated with polyurethane are provided as the intermediate layer (18) and/or final layer (20).

6. Vehicle body part according to Claim 3, **characterized in that** the intermediate layer (18) and/or final layer (20) are produced in a long-fibre injection moulding process.

7. Vehicle body part according to one of the preceding claims, **characterized in that** the sheet-metal part (10) consists of steel.

8. Vehicle body part according to one of the preceding claims, **characterized in that** the sheet-metal part (10) is lowered at its edge.

9. Vehicle body part according to one of Claims 1 to 7, **characterized in that** the sheet-metal part (10) is set back at its edge.

10. Vehicle body part according to Claims 8 and 9, **characterized in that** substantially the entire lowered or set-back edge region (12) of the sheet-metal part (10) is embedded in plastic.

11. Vehicle body part according to Claim 8, **characterized in that** only an outer part of the lowered edge region (12) of the sheet-metal part (10) is embedded in plastic.

12. Vehicle body part according to Claim 9, **characterized in that** only a bottom part of the set-back edge region (12) of the sheet-metal part (10) is embedded in plastic.

13. Process for the production of a vehicle body part, in particular roof module, in which
(a) a sheet-metal part (10) intended to form the outer skin of the body part, provided at least on its outer side with a covering layer (11) by the coil coating process and cut out of a coil, is shaped in accordance with the desired form of the body part to be produced and is trimmed at the edge,
(b) the shaped and trimmed sheet-metal part (10), an intermediate layer (18), a supporting structure (19) and, on the side of the supporting structure facing away from the sheet-metal part (10), a final layer (20) are inserted into a back-pressing mould (16) in such a way that at least one of the aforementioned layers (18, 20) projects beyond the sheet-metal part (10) at the edge,
(c) the arrangement inserted into the back-pressing mould (16) in process step (b), if appropriate with the introduction of additional plastic in the edge region (12) of the sheet-metal part (10), is pressed in such a way that the edge (14) of the sheet-metal part (10) is completely-enclosed by plastic, and
(d) the composite component (21) obtained in process step (c) is trimmed in the region projecting beyond the sheet-metal part (10) at the edge.

14. Process according to Claim 13, **characterized in that** a supporting structure (19) of honeycomb material is used.

15. Process according to Claim 13 or 14, **characterized in that**, in process step (a), the sheet-metal part (10) within the trimmed edge (13) of the composite component (21) obtained in process step (c) is lowered at the edge.

16. Process according to Claim 13 or 14, **characterized in that**, in process step (a), the sheet-metal part (10) within the trimmed edge (13) of the composite component (21) obtained in process step (c) is set back at the edge.

17. Process according to Claim 15 or 16, **characterized in that**, in process step (c), substantially the entire lowered or set-back edge region (12) of the sheet-metal part (10) is enclosed by plastic.

18. Process according to Claim 16, **characterized in that**, in process step (c), only an outer part (30) of the lowered edge region (12) of the sheet-metal part '(10) is enclosed by plastic.

19. Process according to Claim 13 or 14, **characterized in that**, in process step (a), the sheet-metal part (10) is set back at the edge, in process step (b), the intermediate layer (18), the supporting structure (19) and the final layer (20) are inserted into the back-pressing mould (16) in such a way that at least one of the aforementioned layers projects downwards over the set-back edge of the sheet-metal part (10), and in process step (d), the composite component (21) is trimmed underneath the set-back edge of the sheet-metal part (10).

20. Process according to Claim 19, **characterized in that**, in process step (c), only a bottom part of the set-back edge region (12) of the sheet-metal part (10) is enclosed by plastic.

21. Process according to one of Claims of 13 to 20, **characterized in that**, in process step (b), both the intermediate layer (18) and the final layer (20) are inserted so as to project beyond the sheet-metal part (10) at the edge.

22. Process according to one of Claims 13 to 21, **characterized in that**, in process step (b), the supporting structure (19) is also inserted 'so as to project beyond the sheet-metal part (10) at the edge.

23. Process according to one of Claims 13 to 22, **characterized in that** a layer consisting of fibre-reinforced plastic is used as the intermediate layer (18) and/or final layer (20).

24. Process according to Claim 23, **characterized in that**, in order to form the intermediate layer (18) and/or final layer (20), a fibre mat is impregnated with plastic.

25. Process according to Claim 23, **characterized in that**, in order to form the intermediate layer (18) and/or final layer (20), long-fibre-reinforced plastic is applied to the relevant side of the supporting structure (19).

## Revendications

1. Pièce de carrosserie pour véhicule, en particulier module de toit, avec un revêtement extérieur constitué d'une pièce de tôle métallique (10) recouverte au moins extérieurement d'une couche dans un procédé de revêtement en continu (coil-coating), avec une structure porteuse (19) reliée à la face interne de la pièce de tôle métallique (10) par une couche intermédiaire (18), et avec une couche terminale (20) sur la face de la structure porteuse (19) opposée à la pièce de tôle métallique (10), qui sont pressés ensemble en un élément composite (24), dans lequel le bord (14) de la pièce de tôle métallique (10) est complètement noyé dans de la matière plastique d'au moins une des couches (18, 20) et/ou dans la matière plastique introduite lors du pressage dans la zone du bord (12).

2. Pièce de carrosserie pour véhicule selon la revendication 1, **caractérisée en ce que** la structure porteuse (19) est constituée de matériau en nid d'abeilles, en particulier de matériau cellulaire en papier ou en carton.

3. Pièce de carrosserie pour véhicule selon la revendication 1 ou 2, **caractérisée en ce que** la couche intermédiaire (18) et/ou la couche terminale (20) se compose de matière plastique renforcée par des fibres.

4. Pièce de carrosserie pour véhicule selon la revendication 3, **caractérisée en ce que** des nattes de fibres imprégnées de matière plastique sont prévues comme couche intermédiaire (18) et/ou comme couche terminale (20).

5. Pièce de carrosserie pour véhicule selon la revendication 4, **caractérisée en ce que** des nattes de fibres de verre imprégnées de polyuréthanne sont prévues comme couche intermédiaire (18) et/ou comme couche terminale (20).

6. Pièce de carrosserie pour véhicule selon la revendication 3, **caractérisée en ce que** la couche intermédiaire (18) et/ou la couche terminale (20) sont fabriquées dans un procédé de moulage par injection à longues fibres.

7. Pièce de carrosserie pour véhicule selon l'une des revendications précédentes, **caractérisée en ce que** la pièce de tôle métallique (10) est en acier.

8. Pièce de carrosserie pour véhicule selon l'une des revendications .' précédentes, **caractérisée en ce que** la pièce de tôle métallique (10) est abaissée au niveau des bords.

9. Pièce de carrosserie pour véhicule selon l'une des revendications 1 à 7, **caractérisée en ce que** la pièce de tôle métallique (10) est rabattue au niveau des bords.

10. Pièce de carrosserie pour véhicule selon les revendications 8 et 9, **caractérisée en ce que** l'ensemble de la zone de bord (12) abaissée ou rabattue de la pièce de tôle métallique (10) est essentiellement noyé dans de la matière plastique.

11. Pièce de carrosserie pour véhicule selon la revendication 8, **caractérisée en ce que** seule une partie extérieure de la zone de bord (12) abaissée de la pièce de tôle métallique (10) est noyée dans de la matière plastique.

12. Pièce de carrosserie pour véhicule selon la revendication 9, **caractérisée en ce que** seule une partie inférieure de la zone de bord (12) rabattue de la pièce de tôle métallique (10) est noyée dans de la matière plastique.

13. Procédé de fabrication d'un élément de carrosserie pour véhicule, en particulier module de toit, dans lequel
(a) une pièce de tôle métallique (10) découpée à partir d'un feuillard, pourvue au moins sur sa face externe d'un revêtement (11) dans un procédé de revêtement en continu (coil-coating) et destinée à la formation d'un revêtement extérieur de la pièce de carrosserie, est transformée et rognée au niveau des côtés selon la forme souhaitée de la pièce de carrosserie à fabriquer,
(b) la pièce de tôle métallique (10) transformée et rognée, une couche intermédiaire (18), une structure porteuse (19) et une couche terminale (20) sur la face de la structure porteuse opposée à la pièce de tôle métallique (10) sont insérées dans un outil à moulage par compression arrière (16) de telle sorte qu'au moins une des couches mentionnées (18, 20) fait saillie de la pièce de tôle métallique (10) au niveau des côtés,
(c) la disposition mise en place dans l'outil à moulage par compression arrière (16) dans l'étape (b) du procédé, le cas échéant en introduisant de la matière plastique supplémentaire dans la zone de bord (12) de la pièce de tôle métallique (10), est pressée de telle sorte que le bord (14) de la pièce de tôle métallique (10) est complètement entouré de matière plastique, et
(d) l'élément composite (21) obtenu dans l'étape (c) du procédé est rogné dans la zone faisant saillie de la pièce de tôle métallique (10) au niveau des côtés.

14. Procédé selon la revendication 13, **caractérisé en ce qu'**une structure porteuse (19) en matériau en nid d'abeilles est utilisée.

15. Procédé selon la revendication 13 ou 14, **caractérisé en ce que** dans l'étape (a) du procédé, la pièce de tôle métallique (10) au niveau du bord rogné (13) de l'élément composite (21) obtenu dans l'étape (c) du procédé est abaissée au niveau des côtés.

16. Procédé selon la revendication 13 ou 14, **caractérisé en ce que**, dans l'étape (a) du procédé, la pièce de tôle métallique (10) au niveau du bord rogné (13) de l'élément composite (21) obtenu dans l'étape (c) du procédé est rabattue au niveau des côtés.

17. Procédé selon la revendication 15 ou 16, **caractérisé en ce que**, dans l'étape (c) du procédé, l'ensemble de la zone de bord (12) abaissée ou rabattue de la pièce de tôle métallique (10) est essentiellement entouré de matière plastique.

18. Procédé selon la revendication 16, **caractérisé en ce que**, dans l'étape (c) du procédé, seule une partie externe (30) de la zone de bord (12) abaissée de la pièce de tôle métallique (10) est entourée de matière plastique.

19. Procédé selon la revendication 13 ou 14, **caractérisé en ce que**, dans l'étape (a) du procédé, la pièce de tôle métallique (10) est rabattue au niveau des côtés, dans l'étape (b) du procédé la couche intermédiaire (18), la structure porteuse (19) et la couche terminale (20) sont insérées de telle sorte dans l'outil de moulage par compression arrière (16) qu'au moins une des couches mentionnées fait saillie vers le bas du bord rabattu de la pièce de tôle métallique (10), et dans l'étape (c) du procédé l'élément composite (21) est rogné en dessous du bord rabattu de la pièce de tôle métallique (10).

20. Procédé selon la revendication 19, **caractérisé en ce que**, dans l'étape (c) du procédé, seule une partie inférieure de la zone de bord (12) abaissée de la pièce de tôle métallique (10) est entourée de matière plastique.

21. Procédé selon l'une des revendications 13 à 20, **caractérisé en ce que**, dans l'étape (b) du procédé, non seulement la couche intermédiaire (18) mais aussi la couche terminale (20) sont insérées de manière à faire saillie au niveau des côtés de la pièce de tôle métallique (10).

22. Procédé selon l'une des revendications 13 à 21, **caractérisé en ce que**, dans l'étape (b) du procédé, même la structure porteuse (19) est placée de manière à faire saillie au niveau des côtés de la pièce de tôle métallique (10).

23. Procédé selon l'une des revendications 13 à 22, **caractérisé en ce qu'**une couche constituée de matière plastique renforcée en fibres est utilisée comme couche intermédiaire (18) et/ou comme couche terminale (20).

24. Procédé selon la revendication 23, **caractérisé en ce qu'**une natte de fibres est imprégnée de matière plastique pour former la couche intermédiaire (18) et/ou la couche terminale (20).

25. Procédé selon la revendication 23, **caractérisé en ce qu'**une matière plastique renforcée en longues fibres est appliqué sur le côté concerné de la structure porteuse (19) en vue de former la couche intermédiaire (18) et/ou la couche terminale (20).
